# FASCICULE DE BREVET EUROPEEN

(11) **EP 2 198 172 B1**
(45) Date de publication et mention de la délivrance du brevet: **04.04.2012**
(21) Numéro de dépôt: 08870723.7
(22) Date de dépôt: 14.10.2008
(51) Int. Cl.: F16B 43/00, E04D 5/14

(54) **PLAQUETTE DE REPARTITION D'EFFORTS COMPORTANT UNE CUVETTE NERVUREE**
BELASTUNGSVERTEILUNGSPLATTE MIT EINEM GERIFFELTEN AUSSENRING
STRESS DISTRIBUTION PLATE INCLUDING A RIBBED CUP

(30) Priorité: 16.10.2007 FR 0707226
(43) Date de publication de la demande: 23.06.2010
(73) Titulaire: Ateliers LR Etanco, 78230 Le Pecq (FR)
(72) Inventeur: DJAOUTI, David, F-95280 Jouy le Moutier (FR); LEMONTEY, Michel, F-78580 Maule (FR)
(74) Mandataire: Mazabraud, Xavier
(86) Numéro de dépôt international: PCT/FR2008/001444
(87) Numéro de publication internationale: WO 2009/090332

(56) Documents cités:
- CH-A5- 687 270
- FR-A- 2 476 771
- FR-A- 2 860 052
- US-B1- 6 565 303

## Description

La présente invention concerne un dispositif pour la fixation par vissage d'un élément compressible sur un support.

Elle s'applique notamment, mais non exclusivement, à la fixation par vissage d'une membrane d'étanchéité recouvrant une garniture d'isolation réalisée en un matériau compressible, portée par un support rigide tel qu'un bac acier ou autre support rigide de couverture monté sur une charpente.

Usuellement, ce dispositif fait intervenir une plaquette de répartition d'efforts par exemple en tôle d'acier, dont la partie centrale en forme de cuvette comprend un orifice central, sensiblement coaxial, servant pour le passage d'une vis.

Cette cuvette sert à contenir la tête de la vis une fois le vissage effectué, de manière à ce que la tête de la vis ne dépasse pas en saillie de la plaquette. Ceci est indispensable pour pouvoir assurer la continuité de l'étanchéité de la membrane au niveau de l'ensemble vis/plaquette lorsqu'on dispose sur l'ensemble une garniture d'étanchéité, par exemple une bande adhésive ou un nouveau lé de membrane.

Des moyens sont prévus pour empêcher la plaquette de glisser vers la pointe de la vis lorsqu'elle est maintenue par la vis ; on dit que la plaquette est « solide au pas » (voir par exemple FR 03 11029). En effet, il est indispensable qu'une fois le vissage effectué, la plaquette ne puisse pas coulisser vers la pointe de la vis lorsqu'elle est soumise à un effort tendant à comprimer la garniture d'isolation (ceci peut, par exemple, se produire lorsqu'un opérateur marche sur la plaquette). Dans ce cas, l'ensemble plaquette/membrane serait localement enfoncé tandis que la tête de la vis aurait tendance à venir en saillie au-dessus de la plaquette. La garniture d'étanchéité risquerait alors d'être décollée de la membrane d'étanchéité, voire même perforée. Dans un cas comme dans l'autre, l'étanchéité de l'ensemble de la couverture se trouverait compromise. De plus, la garniture d'isolation localement comprimée perdrait une partie de ses propriétés.

Dans le cas d'une plaquette « solide au pas », les efforts de compression lorsqu'un opérateur marche dessus sont repris par la cuvette de la plaquette, qui se déforme légèrement en s'écrasant de façon élastique. La profondeur de la cuvette doit donc être, au repos, supérieure à la hauteur de la tête de la vis d'un écart Δ appelé désafleurement, de façon que, même soumise à cet effort de compression, la tête de la vis ne vienne pas en saillie.

Cependant, la profondeur de la cuvette est fonction de la compressibilité du matériau isolant sous-jacent : plus le matériau est souple, plus la cuvette peut être profonde. Or, les matériaux isolants utilisés sont de plus en plus denses, ce qui conduit à diminuer la profondeur de la cuvette. Le désafleurement Δ entre le sommet de la tête de la vis et le dessus de la plaquette sera plus faible. En conséquence il y a un risque que la tête de la vis vienne en saillie lorsque la plaquette est soumise à un effort.

L'invention a pour objet de permettre à la plaquette de mieux résister à l'effort de compression en la rigidifiant.

Elle propose, à cet effet, une plaquette pour la fixation par vissage d'une matière compressible sur une structure de support, destinée à être utilisée avec une vis, ladite plaquette comprenant une conformation en forme de cuvette de symétrie axiale au centre de laquelle est réalisé un orifice traversant permettant le passage de la vis, ladite vis comprenant une tête et une tige comportant un filetage de fixation et une pointe, coopérant avec ladite plaquette pour empêcher le glissement de la plaquette vers la pointe de la vis lorsque celle-ci est vissée dans la structure de support. La cuvette selon l'invention comporte sur sa paroi une pluralité de nervures radialement saillantes qui s'étendent sensiblement axialement par rapport à l'axe de ladite cuvette.

La cuvette de la plaquette selon l'invention est donc rigidifiée grâce à la présence de nervures dans sa paroi. De cette façon elle résiste mieux à l'effort de compression.

De façon avantageuse, les nervures consistent en une déformation de la paroi de la cuvette, de telle sorte qu'elles sont saillantes sur une face de la paroi et en creux sur la paroi opposée. Comme les nervures des plaquettes d'une même variante sont disposées de la même façon, les plaquettes dont la cuvette est nervurée peuvent s'empiler aussi facilement que les plaquettes à cuvette non nervurée.

Selon une variante de l'invention, les nervures sont saillantes vers l'extérieur de la cuvette. Selon une autre variante de l'invention, les nervures sont saillantes vers l'intérieur de la cuvette.

Les nervures de la cuvette peuvent être en nombre différent selon les variantes de l'invention, mais elles sont de préférence en nombre pair et elles sont également réparties le long de la paroi de la cuvette autour de son axe.

Dans une variante préférée, la plaquette a deux plans de symétrie, elle est par exemple carrée, rectangulaire ou de forme oblongue, la cuvette a une forme générale de cône, les nervures sont réparties selon des génératrices du cône, elles sont saillantes vers l'extérieur de la paroi de la cuvette, elles sont au nombre de quatre et disposées dans les plans de symétrie de la plaquette. Elles peuvent également être réparties à 45° desdits plans de symétrie ;

Un mode d'exécution de l'invention sera décrit ci-après, à titre d'exemple non limitatif, avec référence aux dessins annexés dans lesquels :
La figure 1 est une coupe schématique illustrant le principe de la fixation d'une membrane d'étanchéité recouvrant une garniture d'isolation portée par un bac acier de couverture ;
La figure 2 est une vue en coupe d'une plaquette et d'une vis selon l'état de l'art ;
La figure 3 est une vue en coupe d'une autre plaquette et d'une vis selon l'état de l'art ;
La figure 4 est une vue en perspective d'une plaquette selon l'invention ;
Les figures 5A et 5B représentent des sections transversales de deux plaquettes selon l'invention.

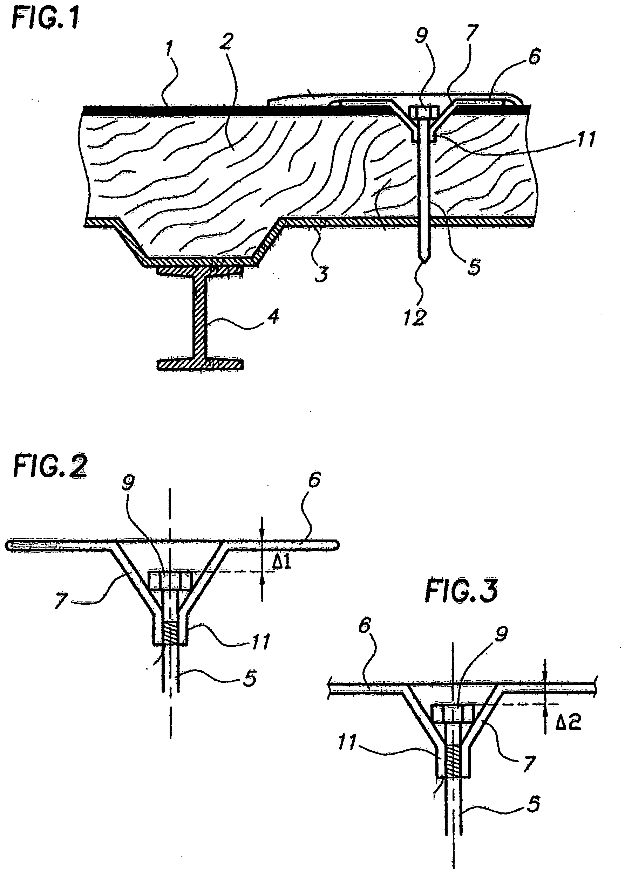

La figure 1 montre un exemple de fixation de la membrane d'étanchéité 1 sur un revêtement d'isolation 2 posé sur des bacs aciers 3 portés par les poutres 4 d'une charpente. Cette fixation s'effectue au moyen de vis 5 équipées de rondelles ou de plaquettes de répartition d'efforts 6. Ces rondelles ou plaquettes 6 servent à transmettre sur l'ensemble membrane/garniture l'effort de serrage exercé par la vis. En conséquence, elles présentent des dimensions relativement importantes par rapport à la tête de la vis.

Dans cet exemple, la cuvette 7 de la plaquette 6 est munie d'une cheminée 11 dans laquelle se visse la vis 5 de façon à empêcher le glissement de la plaquette 6 vers la pointe 12 de la vis lorsqu'elle subit une effort, par exemple lorsqu'un opérateur marche sur la plaquette 6.

La figure 2 illustre le désafleurement Δ₁ qui existe entre la tête 9 de la vis 5 et la partie supérieure de la plaquette 6 de façon à ce que la tête 9 de la vis 5 ne vienne pas en saillie lorsque la cuvette 7 se déforme quand la plaquette 6 subit un effort vertical. Dans cet exemple, la plaquette 6 est conçue pour un matériau isolant 2 souple et la cuvette 7 est de profondeur relativement importante. Dans l'exemple de la figure 3, la plaquette 6 est conçue pour un matériau isolant 2 plus dense et la cuvette 7 est de faible profondeur ; le désafleurement Δ₂ entre la tête 9 de la vis 5 et la partie supérieure de la plaquette 6 est beaucoup plus faible.

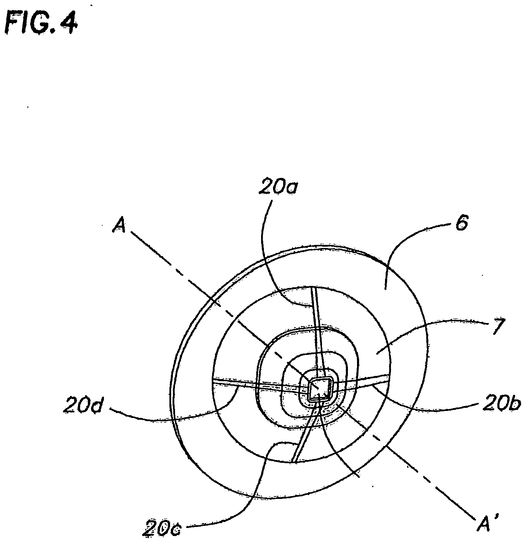

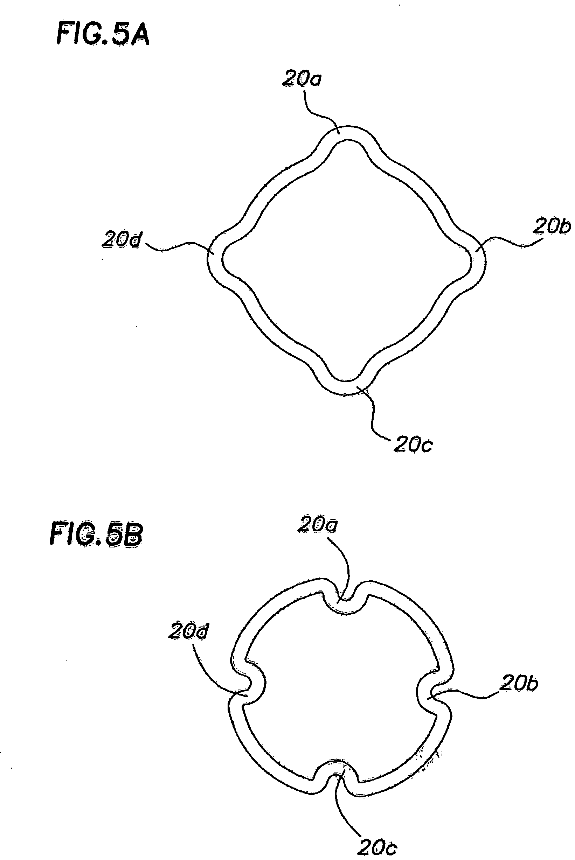

Dans la variante représentée en figure 4, la cuvette 7 de la plaquette 6 présente quatre nervures 20a, 20b, 20c et 20d saillantes sur sa paroi, radiales par rapport à l'axe A-A' de la cuvette 7. Les figures 5A et 5b montrent que ces nervures constituent en fait des déformations de la paroi de la cuvette 7, vers l'extérieur dans la variante de la figure 5A, vers l'intérieur dans la variante de la figure 5B.

Bien entendu, l'invention ne se limite pas à une forme particulière de plaquettes 6. Cette plaquette 6 pourrait présenter une forme carrée, rectangulaire ou oblongue. Les nervures peuvent être disposées dans les plans de symétrie de la plaquette 6 ou bien dans toute autre position par rapport à ces plans, l'important étant que cette position soit constante pour une variante de plaquette donnée, de sorte qu'elles puissent s'empiler facilement.

## Revendications

1. Plaquette (6) destinée à être utilisée avec une vis (5) pour la fixation par vissage d'une matière compressible sur une structure de support, ladite plaquette (6) comprenant une partie centrale en forme de cuvette (7) pour y loger la tête de la vis (5), ladite cuvette étant de symétrie axiale et comprenant une cheminée axiale (11) pour le passage de la vis au travers de la plaquette (6), ladite cheminée coopérant avec ladite vis (5) par vissage,
**caractérisée en ce que** ladite cuvette (7) comporte sur sa paroi une pluralité de nervures radialement saillantes (20a, 20b, 20c, 20d) qui s'étendent sensiblement axialement par rapport à l'axe (A-A') de ladite cuvette (7) de façon à rigidifier la cuvette.

2. Plaquette selon la revendication 1,
**caractérisée en ce que** lesdites nervures saillantes (20a, 20b, 20c, 20d) sont des déformations de la paroi de la cuvette (7).

3. Plaquette selon l'une des revendications 1 ou 2,
**caractérisée en ce que** lesdites nervures saillantes (20a, 20b, 20c, 20d) sont saillantes vers l'extérieur de la cuvette (7).

4. Plaquette selon l'une des revendications 1 ou 2,
**caractérisée en ce que** lesdites nervures saillantes (20a, 20b, 20c, 20d) sont saillantes vers l'intérieur de la cuvette (7).

## Claims

1. A small plate (6) intended to be used with a screw (5) for attachment by screwing of a compressible material on a supporting structure, said small plate (6) comprising a central cup-shaped portion (7) for accommodating the head of the screw (5) therein, said cup having axial symmetry and comprising an axial chimney (11) for letting the screw pass through the small plate (6), are said chimney cooperating with said screw (5) by screwing,
**characterized in that** said cup (7) includes on its wall a plurality of the radially protruding ribs (20a, 20b, 20c, 20d), which extend substantially axially relatively to the axis (A-A') of said cup (7) so as to a rigidify the cup.

2. The small plate according to claim 1,
**characterized in that** said protruding ribs (20a, 20b, 20c, 20d) are deformations of the wall of the cup (7).

3. The small plate according to one of claims 1 or 2,
**characterized in that** said protruding ribs (20a, 20b, 20c, 20d) protrude towards the outside of the cup (7).

4. The small plate according to one of claims 1 or 2,
**characterized in that** said protruding ribs (20a, 20b, 20c, 20d) protrude towards the inside of the cup (7).

## Patentansprüche

1. Platte (6), die zur Verwendung mit einer Schraube (5) zur Befestigung durch Anschrauben eines komprimierbaren Materials an eine Trägerstruktur bestimmt ist, wobei die Platte (6) einen Mittelteil in Muldenform (7) umfasst, um darin den Kopf der Schraube (5) unterzubringen, wobei die Mulde axialsymmetrisch ist und einen axialen Stutzen (11) zum Durchtritt der Schraube durch die Platte (6) umfasst, wobei der Stutzen mit der Schraube (5) durch Verschrauben zusammenwirkt,
**dadurch gekennzeichnet, dass** die Mulde (7) an ihrer Wand eine Vielzahl von radial emporragenden Rippen (20a, 20b, 20c, 20d) umfasst, die sich im Wesentlichen axial bezüglich der Achse (A-A') der Mulde erstrecken (7), derart dass die Mulde versteift wird.

2. Platte nach Anspruch 1,
**dadurch gekennzeichnet, dass** die emporragenden Rippen (20a, 20b, 20c, 20d) Verformungen der Wand der Mulde (7) sind.

3. Platte nach einem der Ansprüche 1 oder 2,
**dadurch gekennzeichnet, dass** die emporragenden Rippen (20a, 20b, 20c, 20d) von der Mulde (7) nach außen emporragen.

4. Platte nach einem der Ansprüche 1 oder 2,
**dadurch gekennzeichnet, dass** die emporragenden Rippen (20a, 20b, 20c, 20d) von der Mulde (7) nach innen emporragen.
